Europäisches Patentamt

European Patent Office

Office européen des brevets

(19)

(11) Numéro de publication: **0 373 086**

**A1**

(12) # DEMANDE DE BREVET EUROPEEN

(21) Numéro de dépôt: 89440121.5

(22) Date de dépôt: 07.11.89

(51) Int. Cl.⁵: **B23B 31/26, B23B 31/02, B23B 31/30**

(30) Priorité: 15.11.88 FR 8815077
20.01.89 FR 8900868

(43) Date de publication de la demande:
**13.06.90 Bulletin 90/24**

(84) Etats contractants désignés:
**AT BE CH DE ES GB GR IT LI LU NL SE**

(71) Demandeur: EMILE PFALZGRAF "EPB", S.A.
8b, rue de Neuwiller
F-67330 Bouxwiller(FR)

(72) Inventeur: Pfalzgraf, Emile
7, rue de Neuwiller
F-67330 Bouxwiller(FR)

(74) Mandataire: Nuss, Pierre et al
10, rue Jacques Kablé
F-67000 Strasbourg(FR)

(54) **Dispositif de montage à queue conique, en particulier au cône 7/24e, à application cône et face pour attachements, porte-outils et outils.**

(57) La présente invention concerne un dispositif de montage à queue conique, en particulier au cône 7/24e, à application cône et face pour attachements, porte-outils et outils, essentiellement constitué par un cône (1) d'introduction dans la broche (2), par une partie avant (3) centrée dans le cône (1) et pourvue d'une collerette (4) d'application contre la face de la broche (2), par une tirette (5) d'assemblage du cône (1) et de la partie avant (3) et par un ensemble élastique (6) de pression du cône (1) dans la broche (2) en position de verrouillage, monté en compression entre ledit cône (1) et la partie avant (3), caractérisé en ce qu'il est pourvu d'un moyen (7) élastiquement déformable appliquant la partie avant (3) à force dans le cône (1), en position de verrouillage.

Fig.1

## Dispositif de montage à queue conique, en particulier au cône 7/24e, à application cône et face pour attachements, porte-outils et outils

La présente invention concerne le domaine des accessoires de machines-outils, à commande numérique, centres d'usinage, cellules et ateliers flexibles, et a pour objet un dispositif de montage à queue conique, en particulier au cône 7/24e, à application cône et face pour attachements, porte-outils et outils.

Actuellement, la fixation ou le montage d'un attachement d'outils ou d'outillages dans les broches de machines à fraiser, à aléser, à commande numérique, de centres d'usinage ou de cellules et d'ateliers flexibles, est généralement réalisée au moyen de queues coniques, dont la conicité la plus courante est de 7/24e. Ces montage et fixation étaient jusqu'à ce jour satisfaisants et le sont encore actuellement pour certaines opérations.

· L'avènement des centres d'usinage au cône 7/24e, présentant la plupart du temps un arrière tronqué et une collerette spéciale pour un changement automatique des outils, a entraîné une modification du cône 7/24e classique avec collerette simple et filetage arrière pour la fixation par tirant fileté.

La majorité des broches de machines construites actuellement sont prévues pour le montage d'outils présentant des cônes 7/24e et des collerettes correspondant aux normes usuelles, seules subsistant encore quelques machines avec des collerettes bien spécifiques à certains constructeurs.

Le type de fixation connu, décrit plus haut, est encore satisfaisant pour certaines applications, mais, du fait de l'augmentation de puissance et de performance importante des machines et centres d'usinage, ainsi que des développements très importants réalisés dans les plaquettes et outils coupants, la fixation des cônes dans les broches n'est plus adaptée aux progrès réalisés par les machines et aux performances des outils et constitue donc un handicap important, la puissance développée par les machines et les forces résultantes pouvant être encaissées par les outils n'étant pas transmissibles au niveau du cône.

En effet, le point critique et la faiblesse des fixations actuelles se situent le plus souvent à la sortie de broche, qui est un point affaiblissant pour tous les porte-outils ou outils, ces derniers devant respecter un diamètre spécifique de l'outil, qui est le grand diamètre de l'extrémité du cône relié par une portion cylindrique de faible longueur à la collerette. Le même problème se pose également, mais de façon moins cruciale, pour la fixation d'outils au cône 7/24e sur des tours.

Par ailleurs, il a été proposé de réaliser la fixation d'outils au moyen d'une queue cylindrique avec application contre la face avant de la broche. Ce mode de réalisation permet, certes, de résoudre le problème du contact parfait entre les surfaces mais nécessite une modification des broches des machines. En outre, le poids de l'outil, important dans certains cas, risque de modifier son alignement par rapport à l'axe de la broche et le positionnement du changeur d'outils doit s'effectuer dans des tolérances extrêmement serrées en tous sens, afin de permettre un alignement parfait de l'axe de la broche et du porte-outils.

Il a également été proposé, dans le cas où de hautes performances devaient être réalisées, pour obtenir une application simultanée du cône et de la face de la broche, d'exécuter, au moyen de gabarits spécifiques à chaque broche, des cônes standards monoblocs. Un tel mode de réalisation entraîne, cependant, des prix de revient extrêmement élevés et nécessite des tolérances de fabrication qui ne peuvent être tenues pour une production en série. En outre, les outils ainsi obtenus sont absolument spécifiques à une broche donnée et ne peuvent en aucun cas être interchangeables avec des outils affectés à d'autres broches donc à d'autres machines. Ce mode de réalisation est donc uniquement valable pour répondre à des problèmes spécifiques.

Par ailleurs, il a également été proposé un dispositif de montage à queue conique, en particulier au cône 7/24e, à application cône et face pour attachements, porte-outils et outils, qui est essentiellement constitué par un cône d'introduction dans la broche, par une partie avant centrée dans le cône et pourvue de la collerette d'application contre la face de la broche, par une tirette d'assemblage du cône et de la partie avant, par un ensemble élastique de pression du cône dans la broche en position de verrouillage, monté en compression entre le cône et la partie avant, et par un moyen de réglage dudit ensemble de pression.

Ce dernier dispositif permet, certes, d'améliorer notablement les performances des fixations d'attachements mais présente encore le risque, en particulier en présence de très grands efforts de coupe, d'un serrage insuffisant desdits attachements et d'un glissement au niveau de l'application cône et face. En effet, la fixation des attachements dépend de la conception des centres d'usinage et machines, notamment en ce qui concerne la puissance du couple de serrage du tirant et du défaut de verrouillage du serreur d'outils.

En outre, une utilisation efficiente des dispositifs à application cône et face est tributaire du serreur de la machine, qui est généralement réalisé par des empilages de rondelles Belleville, qui présente souvent un couple de serrage faible et qui n'est pas muni d'un dispositif de verrouillage mécanique, de sorte que ladite application cône et face ne peut pas apporter tous les avantages souhaités.

La présente invention a pour but de pallier ces inconvénients.

Elle a en effet pour objet un dispositif de montage à queue conique, en particulier au cône 7/24ᵉ, à application cône et face pour attachements, porte-outils et outils, qui est essentiellement constitué par un cône d'introduction dans la broche, par une partie avant centrée dans le cône et pourvue d'une collerette d'application contre la face de la broche, par une tirette d'assemblage du cône et de la partie avant et par un ensemble élastique de pression du cône dans la broche en position de verrouillage, monté en compression entre ledit cône et la partie avant, caractérisé en ce qu'il est pourvu d'un moyen élastiquement déformable appliquant la partie avant à force dans le cône, en position de verrouillage.

L'invention sera mieux comprise, grâce à la description ci-après, qui se rapporte à des modes de réalisation préférés, donnés à titre d'exemples non limitatifs, et expliqué avec référence aux dessins schématiques annexés, dans lesquels :

la figure 1 est une vue en élévation latérale et en coupe d'un dispositif conforme à l'invention ;

la figure 2 est une vue en élévation par l'arrière du cône de l'attachement suivant la figure 1 ;

la figure 3 est une vue analogue à celle de la figure 1 d'une variante de réalisation de l'invention ;

les figures 4 et 5 sont des vues analogues à celles des figures 1 et 3 d'autres variantes de réalisation de l'invention ;

la figure 6 représente, en deux demi-vues en élévation latérale et en coupe, une autre variante de réalisation de l'invention, en position de verrouillage et en position de déverrouillage de l'attachement ;

la figure 7 est une vue en élévation latérale du moyen de serrage mis en oeuvre dans le mode de réalisation suivant la figure 6 ;

la figure 8 est une vue en élévation latérale et en coupe d'une autre variante de réalisation de l'invention ;

la figure 9 est une vue en coupe transversale du moyen de serrage mis en oeuvre dans le mode de réalisation suivant la figure 8, et

les figures 10 à 16 sont des vues en élévation latérales et en coupe d'autres modes de réalisation de l'invention.

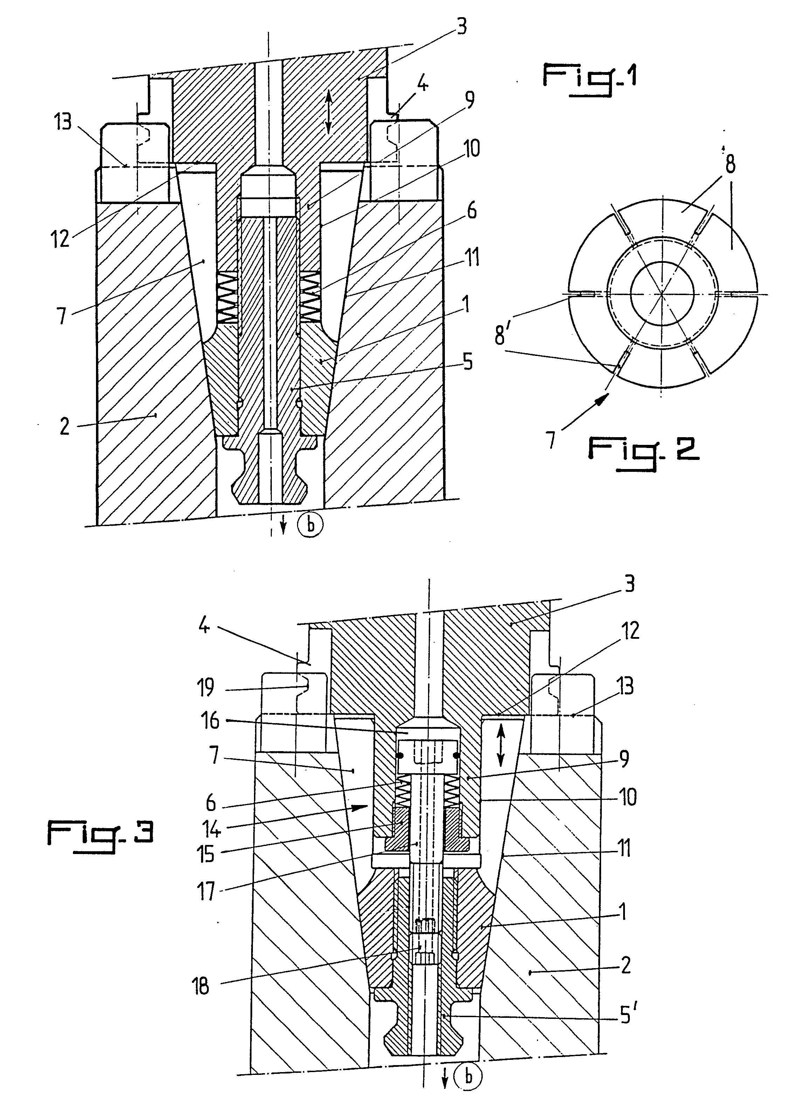

Conformément à l'invention et comme le montre plus particulièrement, à titre d'exemple, la figure 1 des dessins annexés, le dispositif de montage à queue conique en particulier au cône 7/24ᵉ, à application cône et face pour attachements, porte-outils et outils, qui est essentiellement constitué par un cône 1 d'introduction dans la broche 2, par une partie avant 3 centrée dans le cône 1 et pourvue de la collerette 4 d'application contre la face de la broche 2, par une tirette 5 d'assemblage du cône 1 et de la partie avant 3, et par un ensemble élastique 6 de pression du cône 1 dans la broche 2 en position de verrouillage, monté en compression entre ledit cône 1 et la partie avant 3, caractérisé en ce qu'il est pourvu d'un moyen 7 élastiquement déformable appliquant la partie avant 3 à force dans le cône 1, en position de verrouillage.

Le moyen 7 élastiquement déformable se présente avantageusement sous forme de portions de cône 8 délimitées par des fentes 8′ s'étendant longitudinalement et à équidistance sur la circonférence du cône 1 (figure 2). Ainsi, le moyen 7 joue le rôle d'une pince de serrage de la queue 9 de la partie avant 3 dans l'alésage 10 du cône 1.

Afin d'éviter toute introduction accidentelle d'impuretés susceptibles d'empêcher un bon fonctionne ment du moyen 7, les fentes 8′ sont avantageusement remplies par une matière compressible élastiquement déformable. Une telle matière de remplissage peut être constituée par du caoutchouc naturel ou synthétique ou encore par une autre mousse synthétique.

A l'introduction du dispositif de montage dans la broche 2 de la machine, le cône 1 s'appuie dans le cône 11 de la broche 2 et, lors du déplacement réalisé sous l'action du serreur de la machine sur la tirette 5 et du déplacement correspondant, dans le sens de la flèche b, de la partie avant 3, la face 12 de cette dernière prend appui sur la face 13 de la broche 2 de la machine. Simultanément à ce déplacement de la partie avant 3, il s'exerce un effort sur le cône 1 par l'intermédiaire de l'ensemble élastique de pression 6, formé par un empilement de rondelles Belleville ou par un autre moyen élastique, de sorte que ledit cône est appliqué davantage contre le cône 11 de la broche 2. Cet effet d'augmentation de la compression du cône 1 entraîne, du fait de la prévision des fentes 8′, une déformation des portions de cône 8 délimitées entre ces fentes 8′ et un serrage de la queue 9 de la partie avant 3 dans l'alésage 10 du cône 1. Ce serrage est analogue à celui d'une pince de serrage sur une queue de fraise ou foret.

Les deux efforts conjugués, d'une part, de la tirette 5, actionnée par le serreur de la machine, sur les deux faces d'appui 12 et 13 et, d'autre part, du serrage du cône 1, grâce aux fentes 8′, sur la queue 9 de la partie 3, un décollage des faces 12 et 13 n'est plus possible.

L'effort de maintien du dispositif est fonction du couple de serrage sur la tirette 5 au moyen du serreur de la machine et du placage du cône 1 dans la broche 2 sous l'action de l'ensemble élastique de pression 6, le blocage de la queue 9 de la partie avant 3 en résultant ayant pour conséquence de supprimer tout jeu d'ajustement dû aux tolérances d'usinage de la queue 9 et de l'alésage de réception 10.

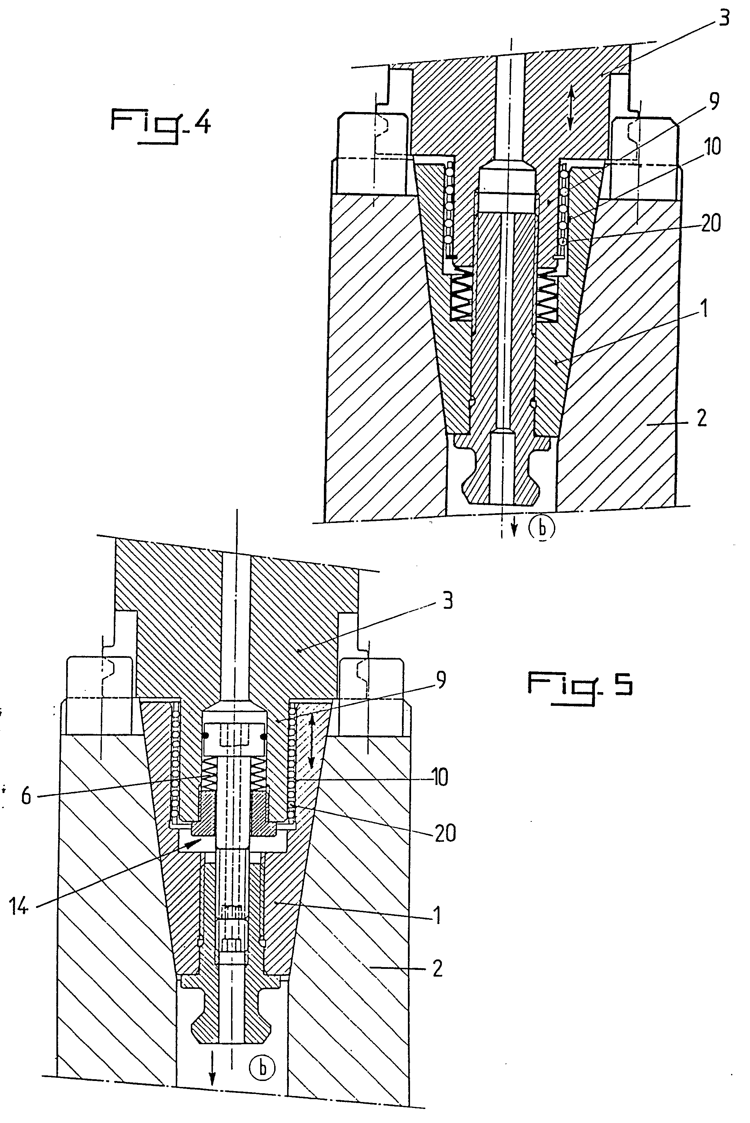

La figure 3 des dessins annexés représente une variante de réalisation de l'invention, dans laquelle l'ensemble élastique 6 de pression du cône 1 dans la broche 2 en position de verrouillage est pourvu d'un dispositif de réglage 14 coopérant avec une tirette courte 5' d'assemblage du cône 1 et de la partie avant 3, ladite tirette 5' étant vissée dans le cône 1 et bloquée contre sa face arrière.

Le dispositif de réglage 14 est constitué par un écrou 15 serrant l'ensemble élastique 6, dans un alésage 16 de la queue 9 de la partie avant 3, contre la tête d'une vis 17, pourvue à ses deux extrémités d'un six-pans creux de manoeuvre, qui coopère avec un taraudage de la tirette courte 5', et par un contre-écrou 18 s'appuyant contre ladite vis 17 et également pourvue d'un six-pans creux de manoeuvre, la vis 17 et le contre-écrou 18 pouvant être munis, en outre, d'un perçage axial de passage de fluide de lubrification. Le contre-écrou 18 peut être remplacé par un dispositif d'anti-desserrage prévu dans les filets du taraudage de la tirette 5'.

La vis 17 est introduite dans l'alésage 16 de la queue 9, puis 1 ensemble élastique 6, sous forme d'un empilage de rondelles Belleville dans ce mode de réalisation, est mis en pression sur ladite vis 17, contre la tête de cette dernière et est bloqué par l'écrou 15. La tirette courte 5' est alors vissée dans le cône 1 et bloquée contre la face arrière de ce dernier.

L'introduction de la queue 9 de la partie avant 3 dans l'alésage 10 du cône 1 s'effectue par vissage de la vis 17 dans le taraudage correspondant de la tirette 5'. Ce vissage peut être réalisé en accédant à l'un des six-pans de manoeuvre de la vis 17 à travers un perçage prévu à cet effet dans la partie avant 3 ou dans la tirette courte 5'. Par ce vissage, il est possible de régler simultanément l'écartement entre la face avant du cône 1 et la face 12 d'application de la partie avant 3 de telle manière que les faces 12 et 13 soient appliquées l'une contre l'autre lors de l'introduction du montage dans la broche 2. Après ce réglage, la vis 17 est bloquée au moyen du contre-écrou 18.

Après introduction du dispositif de montage dans la broche 2 de la machine et appui mutuel des faces 12 et 13, le serreur de la machine exerce un effort sur la tirette 5' dans le sens de la flèche b. Le cône 1 est alors entraîné et appliqué avec force contre la paroi du cône 11 de la broche 2.

Comme dans le mode de réalisation suivant les figures 1 et 2, le cône 1 peut également être muni d'un moyen 7 élastiquement déformable sous forme de portions de cône 8 délimitées par des fentes 8 s'étendant longitudinalement et à équidistance sur la circonférence du cône 1. Dans un tel cas, la queue 9 de la partie avant 3 est comprimée dans l'alésage 10 du cône 1 lors de la traction sur la tirette 5'.

Simultanément au déplacement du cône 1 suivant la flèche b, la vis 17 exerce une action de compression sur l'ensemble élastique 6 qui, par réaction, transmet une force de pression sur les faces 12 et 13 en contact, accentuant la force d'application mutuelle à laquelle elles sont déjà soumises.

Le couple de serrage entre les faces 12 et 13 est réglable, comme décrit précédemment, au moyen du dispositif 14.

Dans le mode de réalisation suivant la figure 3, le dispositif de montage s'applique, contrairement au mode de réalisation suivant la figure 1, d'abord contre la face 13 de la broche 2, par la face 12 de la partie avant 3, le cône 1 restant libre et n'étant pas encore appliqué contre la paroi du cône 11 de la broche 2. En outre, ce mode de réalisation permet de disposer d'un positionnement toujours précis de la gorge en V 19 de la collerette 4 destiné à la préhension au moyen d'un bras d'un changeur d'outils, que le dispositif de montage soit serré ou non dans la broche, de sorte que le changement automatique est considérablement amélioré.

La figure 4 des dessins annexés représente une autre variante de réalisation de l'invention, dans laquelle le moyen 7 élastiquement déformable est constitué sous forme d'une cage à billes 20 monté avec précontrainte dans l'alésage 10 du cône 1 et sur la queue 9 de la partie avant 3. Ce mode de réalisation élimine toutes les tolérances d'ajustage entre la queue 9 et l'alésage 10, de sorte que tous les jeux sont supprimés et que l'assemblage des éléments est plus précis, permettant ainsi un meilleur fonctionnement du montage.

Conformément à une autre caractéristique de l'invention, le cône 1 peut avantageusement être pourvu, sur la profondeur de l'alésage 10, d'au moins une fente longitudinale, non représentée, la cage à billes 20 étant disposée ou réalisée, de manière connue, de telle sorte qu'aucune bille n'entre dans la ou les fentes. Grâce à ce mode de réalisation, il est possible d'obtenir une pression supplémentaire sur la queue 9 de la partie avant 3, lors du serrage du montage au moyen du serreur de la machine, le cône 1 agissant, par l'intermédiaire de la cage à billes 20, de la même manière que dans les modes de réalisation suivant les figures 1 à 3 et la face arrière de la partie avant 3 étant appliquée sur la face avant de la broche 2.

Le mode de réalisation suivant la figure 5 constitue une variante de celui suivant la figure 4. En effet, l'assemblage sans jeu entre la queue 9 de la partie avant 3 et le cône 1 est effectué, d'une part, au moyen d'une cage à billes 20 logée dans le cône 1 avec précontrainte, ledit cône 1 pouvant être muni d'au moins une fente longitudinale au niveau de l'alésage 10 et, d'autre part, au moyen d'un dispositif 14 de réglage de l'ensemble élastique 6. Ce dispositif 14 a été décrit précédemment en relation avec le mode de réalisation suivant la figure 3.

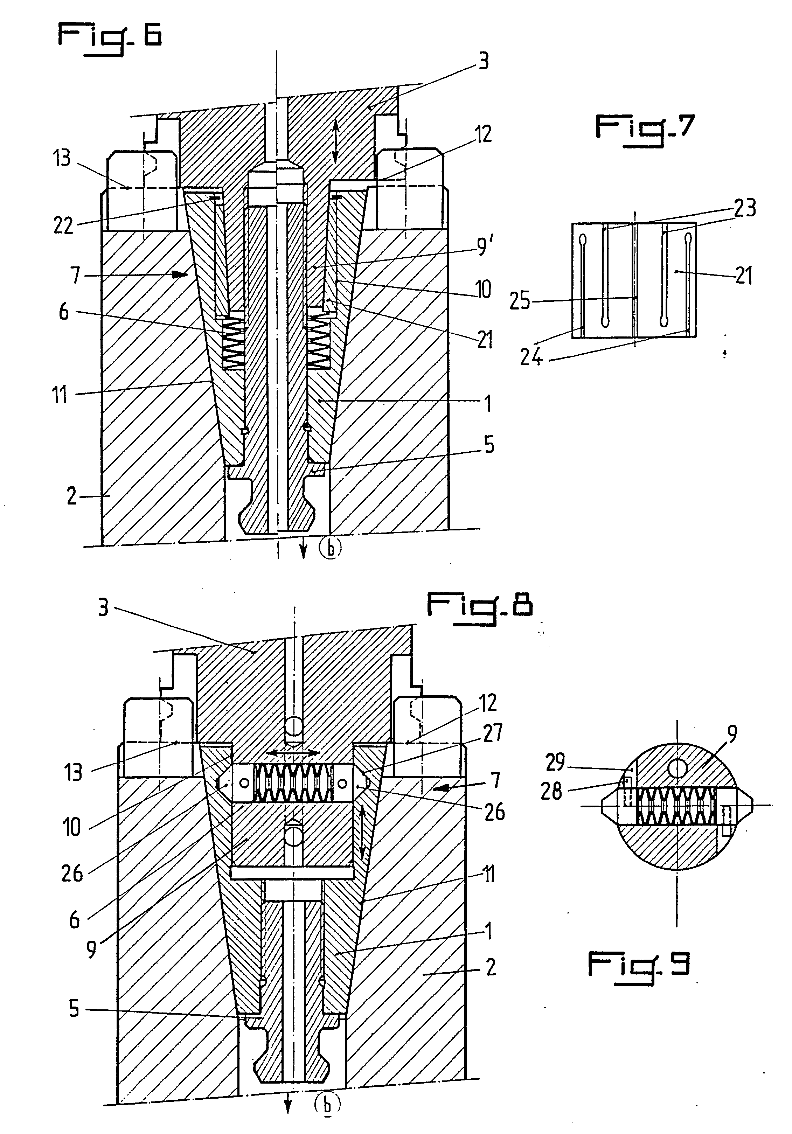

La figure 6 représente une autre variante de réalisation de l'invention avec élimination des tolérances d'usinage et d'ajustage entre le cône 1 et la partie avant 3. Dans ce mode de réalisation, le moyen 7 élastiquement déformable est constitué par une bague fendue conique 21, intercalée entre une queue conique 9' de la partie avant 3 et l'alésage 10 du cône 1, s'appuyant dans le fond de l'alésage 10 sur l'ensemble élastique de pression 6 et retenue dans ledit alésage 10, contre l'action de l'ensemble 6, par une bague élastique 22, l'assemblage entre la partie avant 3 et le cône 1 étant réalisé par une tirette 5.

La conicité de la queue 9' est avantageusement faible et, de préférence, inférieure au cône 7/24$^e$, le grand diamètre du cone étant du côté de la face arrière 12 de la partie avant 3.

La bague fendue conique 21 (figure 7) est munie sur son pourtour, à intervalles réguliers, de fentes 23, 24 ouvertes alternativement sur les faces supérieure et inférieure et d'une fente traversante 25.

Avant le montage du dispositif et l'introduction de la partie avant 3 dans le cône 1, l'ensemble 6, sous forme d'un empilage de rondelles Belleville, est mis en place dans un logement prévu à cet effet au fond de l'alésage 10, puis la bague fendue conique 21 est introduite dans l'alésage 10. Cette bague 21 est retenue dans ledit alésage 10 au moyen de la bague élastique 22 contre l'action de l'ensemble 6 afin qu'elle ne soit pas éjectée et reste appliquée contre ladite bague pendant le montage de la partie avant 3 dans le cône 1 muni de la bague 21 et la fixation au moyen de la tirette 5.

Lors de l'introduction dans le cône 11 de la broche 2 de la machine, le cône 1 s'applique dans ce dernier et la face 12 de la partie avant 3 reste en retrait de la face 13 de la broche 2. Lors du serrage, au moyen de la tirette 5, actionné par le serreur de la machine, en direction de la flèche b, la partie avant 3 avance en direction de la face 13 de la broche 2 et, simultanément, le cône de la queue 9' qui est en contact avec celui de la bague 21, entraîne cette dernière à coulissement dans l'alésage 10. En même temps que la face 12 vient en contact avec la face 13 de la broche 2, il se produit un serrage de la bague 21 entre l'alésage et la queue 9', du fait de la pression exercée sur la bague 21 par l'ensemble 6. Cette pression a pour effet une application plus importante du cône 1 dans le cône 11 de la broche 2, par l'intermédiaire de la tirette 5 qui entraîne simultanément la partie avant 3 et la bague fendue conique 21.

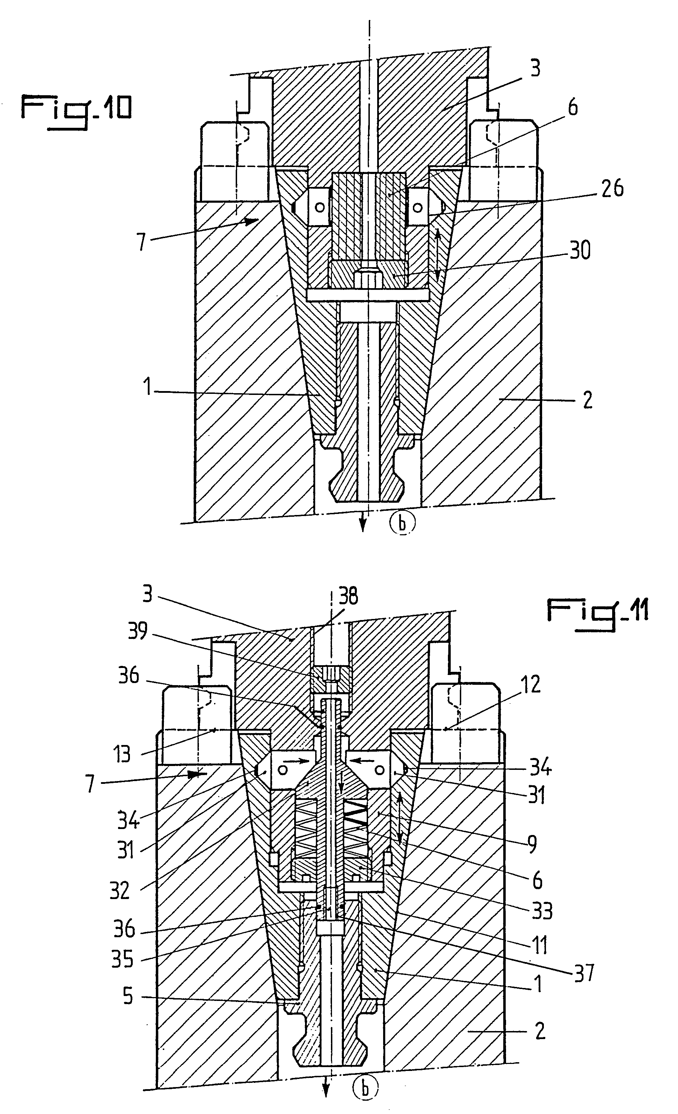

Dans le mode de réalisation suivant les figures 8 et 9, le moyen 7 élastiquement déformable est constitué par deux pièces 26 en forme de pointes, de billes, ou autres, disposées dans un logement s'étendant diamétralement dans la queue 9 de la partie avant 3 et chargées par l'ensemble élastique 6, ces pièces 26 coopérant, en position d'assemblage de la partie avant 3 et du cône 1, avec un logement 27 de section correspondante ou sensiblement correspondante, s'étendant sur tout ou partie de la paroi de l'alésage 10 du cône 1 suivant une génératrice circulaire, ce logement 27 étant relié à la face supérieure du cône 1 par l'intermédiaire de deux ouvertures longitudinales diamétralement opposées de passage des pièces 26, décalées par rapport à la position de service desdites pièces 26, la tirette 5 étant simplement vissée dans le cône 1 et s'appuyant sur sa face arrière. Ce montage du moyen 7 est analogue à un montage du type baïonnette, qui permet, lors de l'introduction du dispositif de montage dans la broche 2 de la machine, d'appliquer les faces 12 et 13 l'une sur l'autre.

Afin d'éviter une sortie accidentelle des pièces 26 hors de leur logement diamétral dans la queue 9, ces dernières sont pourvues chacune d'un arrêt 28 guidé dans une rainure 29 de la queue 9 (figure 9).

Lors d'une traction sur la tirette 5 dans le sens de la flèche b, le cône 1 se déplace pour s'appliquer contre le cône 11 de la broche 2, ce qui a pour effet d'entraîner un déplacement des pièces 26 en direction de l'axe longitudinal de la partie avant 3 contre l'action de l'ensemble élastique 6, du fait de l'effort qui leur est appliqué par le logement 27. La transmission de ces divers efforts a pour conséquence un placage mutuel plus important des faces 12 et 1, entraînant leur verrouillage.

La figure 10 représente une variante de réalisation du dispositif selon la figure 9, dans laquelle l'ensemble élastique 6, sur lequel s'appuient les pièces 26 formant le moyen 7, est constitué par une matière compressible telle que du caoutchouc, ou analogue, disposée dans un logement axial de la queue 9 de la partie avant 3 et dont la compression est réglable au moyen d'un bouchon 30.

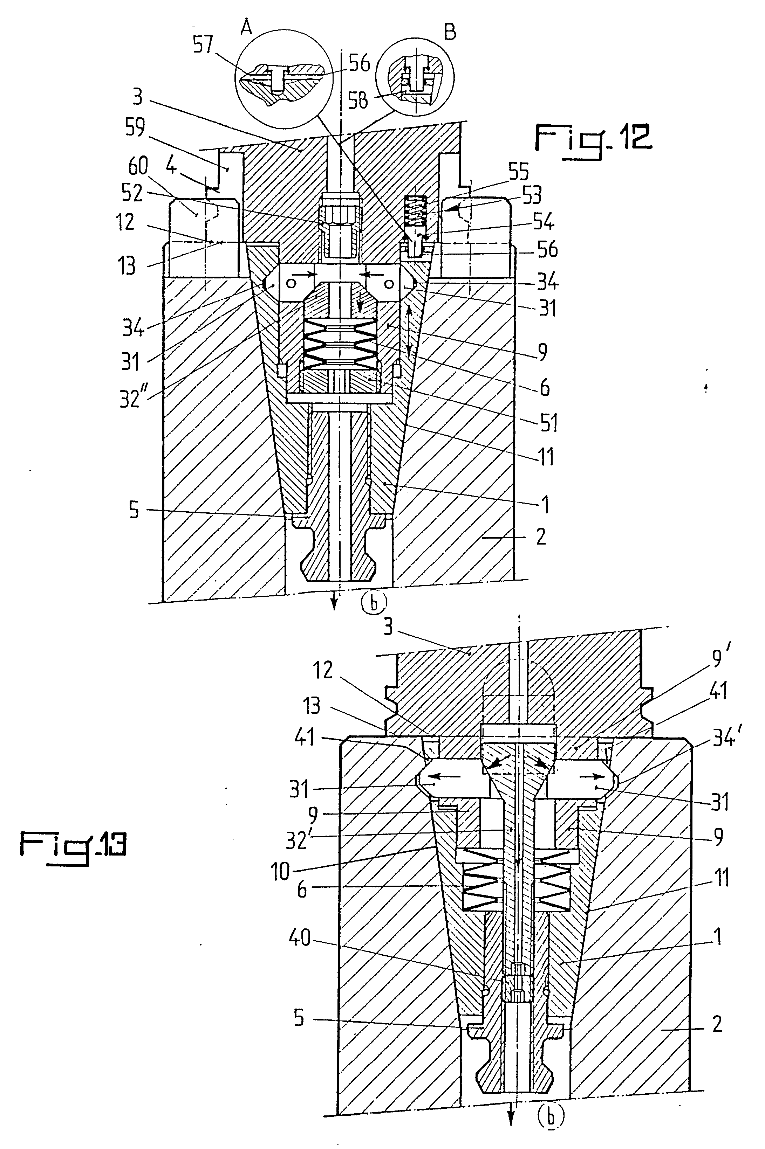

La figure 11 représente une autre variante de réalisation de l'invention, dans laquelle le moyen 7 élastiquement déformable est constitué par plusieurs pièces 31 mobiles radialement, uniformément réparties sur la circonférence de la queue 9, coopérant avec une gorge périphérique 34 et actionnées par un poussoir tronconique central 32 chargé par l'ensemble élastique de pression 6, dont la pression de serrage est réglée au moyen d'un écrou 33, ledit poussoir 32 étant muni d'un axe creux 35 de guidage à ses extrémités dans la partie avant 3 et dans la tirette 5 vissée dans l'extrémité arrière du cône 1, avec interposition de joints toriques d'étanchéité 36. Ces derniers joints sont destinés à assurer l'étanchéité au produit de lubrification passant éventuellement au centre de la broche.

Selon une caractéristique de l'invention, l'axe creux 35 du poussoir 32 est pourvu, à son extrémité guidée dans la tirette 5, d'un taraudage 37, et la partie avant 3 est munie d'un taraudage axial 38, dans lequel est monté un écrou 39 à six-pans de manoeuvre. Le taraudage 37 est destiné à réaliser une compression de l'ensemble 6 au moyen d'une vis introduite à travers la tirette 5 et s'appuyant sur un dispositif de montage et de démontage prenant appui sur la face 12, afin de libérer les pièces 31 de la gorge 34 en vue de permettre le démontage de la partie avant 3 du cône 1 ou son montage dans ce dernier. La compression de l'ensemble 6 peut également être réalisée par actionnement de l'écrou 39 logé dans la partie avant 3. Le cône 1 est monté dans la broche 2 sans contact avec le cône 11 de cette dernière, les parois 12 et 13 étant en contact mutuel, les pièces mobiles 31 étant positionnées dans la gorge 34. Lors de l'application d'une force sur la tirette 5 au moyen du serreur de la machine suivant la flèche b, le cône 1 se déplace et s'applique contre la paroi du cône 11 de la broche 2. Simultanément, les pièces mobiles 31 se déplacent radialement en direction du poussoir 32 et, par l'intermédiaire du cône de ce dernier transmettent une force de serrage sur l'ensemble 6, qui a pour effet d'augmenter la force d'application des pièces 31 dans la gorge 34 ainsi que d'augmenter la force d'application mutuelle des faces 12 et 13 entraînant leur verrouillage.

Selon une autre caractéristique de l'invention, les pièces mobiles 31 sont avantageusement chargées par des ressorts de rappel (non représentés) les appliquant contre le poussoir 32. Ainsi, un dépassement des pièces 31 hors de la queue 9 en position de montage ou de démontage dans le cône 1 pourra être évité.

Le mode de réalisation selon la figure 11 permet l'obtention de couples de serrage importants entre les faces 12 et 13 ainsi qu'une répartition régulière de ces forces sur lesdites faces.

La figure 12 représente une variante de réalisation du dispositif suivant la figure 11, dans laquelle les pièces mobiles 31, chargées par des ressorts de rappel, non représentés, sont logées de manière déplaçables radialement dans la queue 9 de la partie avant 3 contre l'action d'un poussoir tronconique 32″ s'appuyant sur l'ensemble élastique 6, dont la pression est réglable au moyen d'un écrou 51 à six-pans creux traversant, le poussoir tronconique 32″ pouvant être manoeuvré contre l'action de l'ensemble 6, dans le sens d'une rétraction des pièces 31, au moyen d'une vis-écrou 52 logée dans la partie avant 3 et la face arrière 12 de la partie avant 3 est pourvue d'un dispositif 53 de verrouillage de positionnement de ladite partie avant 3 par rapport au cône 1.

Le dispositif de verrouillage 53 est constitué par un axe ou pige 54, qui est monté contre l'action d'un ressort de rappel 55 dans un logement correspondant de la partie avant 3 et maintenu dans ce logement au moyen d'une bague élastique, et qui coopère avec un logement 56 (détail A), ménagé dans la face avant du cône 1 et présentant une pente inclinée 57 de dégagement de la pige 54 lors du démontage, un trou 58 étant prévu, en outre, radialement sous le logement 56 (détail B).

Grâce à ce mode de réalisation, il est possible de verrouiller le positionnement de la partie avant 3 par rapport au cône 1 par orientation des pièces mobiles 31 s'introduisant dans le ou les logements 34 correspondants du cône 1 et, donc, des rainures 59 de la collerette 4 par rapport aux tenons 60 de la broche 2. Le démontage s'effectue par une légère rotation de la partie avant 3 sur le cône 1, la pige 54 se dégageant alors du logement 56 par glissement sur la pente inclinée 57, après un léger retrait réalisé au moyen d'une pointe à tracer, d'un tournevis ou analogue, introduite par le trou 58, ce retrait étant destiné à faire passer 1 extrémité de la pige 54 sur la pente inclinée 57.

Ce dispositif de verrouillage est surtout utilisé lors de l'introduction de la partie avant 3 dans le cône 1 par un dispositif du type baïonnette, tel que décrit plus haut.

Selon une caractéristique de l'invention, la partie avant 3, la tirette 5, le poussoir tronconique 32″, l'ensemble élastique 6 et la vis-écrou 52 sont avantageusement munis d'un perçage axial permettant l'accés au six-pans creux de manoeuvre de l'écrou 51. Ainsi, il est possible, le dispositif étant monté, de régler le couple de serrage et de pression de l'ensemble 6 au moyen de 1 écrou 51 par introduction d'une clé correspondante à travers le perçage de la tirette 5. Un tel réglage est également possible par introduction de ladite clé à travers le trou de la partie avant 3, de la vis-écrou 52, du poussoir tronconique 32″ et de l'ensemble 6.

Le montage et le démontage de la partie avant 3 dans et hors du cône 1 s'effectuent par vissage préalable de l'écrou-vis 52 de manière à exercer un effort de compression sur le poussoir tronconique 32″ contre l'ensemble élastique 6, libérant les pièces mobiles 31, qui reculent vers l'axe central. Dans le cas où un dispositif à baïonnette est prévu dans le logement du cône 1, il suffit d'exercer un effort moindre au moyen de l'écrou-vis 52 sur le poussoir tronconique 32″.

Le dispositif selon la figure 12 est plus particulièrement applicable dans le cas où une lubrifica tion par le centre de la broche 2 n'est pas nécessaire.

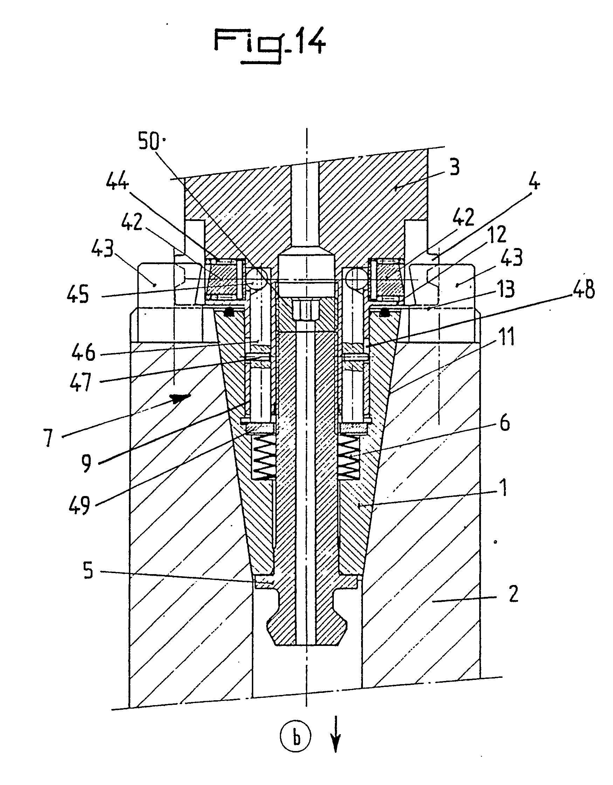

La figure 13 représente une autre variante de réalisation du dispositif suivant la figure 12, dans laquelle des pièces mobiles 31, chargées par des ressorts de rappel (non représentés), sont logées avec possibilité de déplacement radial dans la queue 9 de la partie avant 3 contre l'action d'un poussoir conique 32′, vissé à son extrémité dans la tirette 5 et pouvant être bloquée dans cette dernière au moyen d'un écrou 40, ladite tirette 5 étant montée à coulissement dans la partie arrière du cône 1, la queue 9 de la partie avant 3 s'appuyant au fond de l'alésage 10 du cône 1 sur l'ensemble élastique 6 et lesdites pièces mobiles 31 traversant des dégagements correspondants du cône 1 et coopérant avec une gorge circulaire 34′ ou des logements circulaires prévus dans la broche 2. Ce mode de réalisation nécessite un usinage de la broche 2 de la machine pour la réception des extrémités des pièces mobiles 31.

Conformément à une caractéristique de l'invention, la queue 9 de la partie avant 3 est avantageusement étagée et présente, au niveau du guidage des pièces mobiles 31, une partie de plus grand diamètre 9′. Ainsi, le guidage desdites pièces mobiles 31 de la queue 9 est augmenté.

Selon une autre caractéristique de l'invention, l'extrémité du poussoir conique 32′, vissé dans la tirette 5, ainsi que l'écrou 40 sont munis d'un six-pans creux de manoeuvre destiné à permettre le réglage de la position du poussoir 32′ par rapport à la tirette 5 et le blocage en position au moyen d'un outil introduit à travers le perçage central de ladite tirette 5.

A l'introduction du dispositif de montage dans la broche 2, le cône 1 est en contact avec le cône 11 de ladite broche 2 et il subsiste un jeu minime tenant compte des tolérances des broches et des porte-outils, entre les faces 12 et 13. Par l'intermédiaire de la ti rette 5, le serreur de la machine entraîne le poussoir 32′ qui exerce, par sa partie conique, un couple et une pression sur les pièces mobiles 31, qui pénètrent dans la gorge 34′, ou analogue et, du fait de la coopération de forme à ce niveau, transmettent cette pression à la partie avant 3, plaquant et verrouillant mutuellement les faces 12 et 13. Le déplacement de la partie avant 3 entraîne une pression supplémentaire sur l'ensemble élastique 6, ce qui a pour effet d'appliquer davantage le cône 1 dans le cône 11 de la broche 2.

Le montage dans et le démontage hors de la broche 2 de la machine sont simples à réaliser du fait que, dès que le serreur de la machine est relâché, la tirette s'applique sur la face arrière du cône 1 et que la partie conique du poussoir 32′ libère la pression sur les pièces mobiles 31 qui rentrent alors dans leur logement, permettant la sortie de la broche 2.

La figure 14 des dessins annexés représente une autre variante de réalisation de l'invention, dans laquelle, le moyen 7 élastiquement déformable appliquant la partie avant 3 à force dans le cône 1, en position de verrouillage est avantageusement réalisé sous forme d'un dispositif de transmission d'effort à renvoi d'angle constitué par des verrous en coin 42 logés dans des dégagements de la collerette 4 et coopérant en position de service avec des faces inclinées de manière correspondante des tenons d'entraînement 43 de la broche 2 de la machine, lesdits verrous 42 étant rappelés en position de repos par des ressorts 44, par des billes de transmission d'effort 45 s'appuyant sur la face arrière des verrous 42 et par des poussoirs 46, présentant une extrémité inclinée d'appui de la bille 45 correspondante, guidés dans la queue 9 de la partie avant 3 au moyen d'un ergot 47 coulissant dans une rainure 48 correspondante et s'appuyant par l'intermédiaire d'une rondelle 49 sur l'ensemble élastique de pression 6, l'assemblage entre la partie avant 3 et le cône 1 étant réalisé au moyen d'une tirette 5 dont la position est réglable et peut être bloqué par un écrou 50.

Dans ce mode de réalisation les tenons d'entraînement 43 de la broche 2 de la machine sont utilisés pour le verrouillage et l'application mutuelle des faces 12 et 13. L'ensemble 6 est destiné à tenir compte des désaxages éventuels des tenons dans les broches de machines, ainsi que des tolérances larges de ces dernières. En outre, l'ensemble 6 fournit également le couple d'application des verrous 42 et donc le couple de verrouillage et d'application du cône 1 dans le cone 11 de la broche 2.

L'application de la face 12 contre la face 13 est réalisée grâce à la tirette 5 au moyen du serreur de la machine par déplacement dans le sens de la flèche b.

Bien entendu, les verrous 42 pourraient également présenter une forme différente, à savoir ronde, conique ou autre.

Selon une autre caractéristique de l'invention, non représentée aux dessins annexés, l'ensemble élastique 6 peut avantageusement être constitué sous forme d'un bloc compressible en caoutchouc, ou autre matière synthétique, sous forme d'un ou de plusieurs ressorts, sous forme d'un dispositif de compression hydraulique ou pneumatique ou encore sous forme d'une poudre compressible.

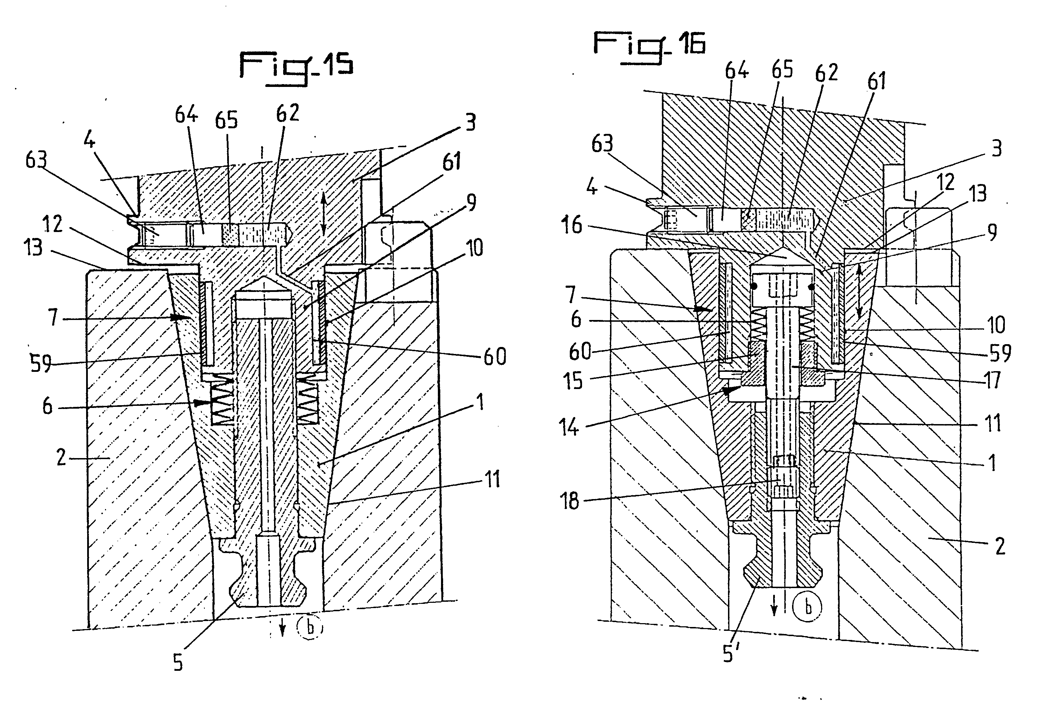

La figure 15 des dessins annexés représente une autre variante de réalisation de l'invention, dans laquelle le moyen 7 élastiquement déformable appliquant la partie avant 3 à force dans le cône 1, en position de verrouillage, est avantageusement constitué sous forme d'un dispositif hydraulique à pression réglable comportant une paroi 59 déformable au niveau de la liaison entre la queue 9 de la partie avant 3 et l'alésage 10 du cône 1.

Le dispositif hydraulique à pression réglable formant le moyen 7 élastiquement déformable est avantageusement constitué par une chambre annulaire étanche 60 délimitée, sur le pourtour de la queue 9, par la paroi déformable 59 et reliée par un canal 61 à une chambre étanche 62 dans laquelle est monté, de manière déplaçable, contre l'action d'une vis de réglage 63, un piston 64 pourvu d'une garniture d'étanchéité 65.

La paroi déformable 59 est, de préférence, sous forme d'une bague mince sertie à ses extrémités aux extrémités de la chambre annulaire 60 ou délimitant cette chambre par interposition de joints d'étanchéité.

A l'introduction du dispositif de montage dans la broche 2 de la machine, le cône 1 s'appuie dans le cône 11 de la broche 2 et, lors du déplacement réalisé sous l'action du serreur de la machine sur la tirette 5 et du déplacement correspondant, dans le sens de la flèche b, de la partie avant 3, la face 12 de cette dernière prend appui sur la face 13 de la broche 2 de la machine. Simultanément à ce déplacement de la partie avant 3, il s'exerce un effort sur le cône 1 par l'intermédiaire de l'ensemble élastique de pression 6, formé par un empilement de rondelles Belleville ou par un autre moyen élastique, de sorte que ledit cône est appliqué davantage contre le cône 11 de la broche 2. Afin de supprimer tout jeu entre la queue 9 et le cône 1, la vis 63 est alors actionnée dans le sens d'une compression du liquide hydraulique contenu dans la chambre 62 par le piston 64 pourvu de sa garniture d'étanchéité 65. Un tel actionnement a pour effet de chasser le liquide hydraulique vers la chambre annulaire 60 et de provoquer une déformation de la paroi 59 entraînant une application à force de cette dernière contre la paroi de l'alésage 10 du cône 1 et ainsi un serrage extrêmement puissant de la queue 9 dans ledit alésage 10.

La figure 16 du dessin annexé représente une autre variante de réalisation de l'invention, dans laquelle l'ensemble élastique 6 de pression du cône 1 dans la broche 2 en position de verrouillage est pourvu d'un dispositif de réglage 14 coopérant avec une tirette courte 5' d'assemblage du cône 1 et de la partie avant 3, ladite tirette 5' étant vissée dans le cône 1 et bloquée contre sa face arrière.

Le dispositif de réglage 14 est constitué par un écrou 15 serrant l'ensemble élastique 6, dans un alésage 16 de la queue 9 de la partie avant 3, contre la tête d'une vis 17, pourvue à ses deux extrémités d'un six-pans creux de manoeuvre, qui coopère avec un taraudage de la tirette courte 5', et par un contre-écrou 18 s'appuyant contre ladite vis 17 et également pourvue d'un six-pans creux de manoeuvre, la vis 17 et le contre-écrou 18 pouvant être munis, en outre, d'un perçage axial de passage de fluide de lubrification.

Dans ce mode de réalisation, le dispositif hydraulique est représenté dans la même configuration que dans le mode de réalisation suivant la figure 15. Cependant, selon une caractéristique de l'invention, l'actionnement du dispositif hydraulique peut également être réalisé au moyen d'un piston relié à la vis 17 et comprimant le liquide hydraulique dans la chambre 62 en fin de course de serrage du cône 1 de la partie avant 3 dans le cône 11 de la broche 2. Dans un tel cas, le piston 64 et la chambre 62 seraient avantageusement logés dans l'ensemble 6.

Après introduction du dispositif de montage dans la broche 2 de la machine et appui mutuel des faces 12 et 13, le serreur de la machine exerce un effort sur la tirette 5' dans le sens de la flèche b. Le cône 1 est alors entraîné et appliqué avec force contre la paroi du cône 11 de la broche 2. Au cours de ce serrage, il se produit un déplacement de la vis 17, entraînée par la tirette 5', et donc du piston relié à ladite vis 17, de sorte qu'est effectuée une compression du liquide hydraulique dans la chambre 62, ce qui entraîne une mise sous pression du liquide dans la chambre annulaire 60 et une déformation de la paroi 59 ayant pour effet un serrage de la queue 9 dans l'alésage 10.

Conformément à une variante de réalisation de l'invention, non représentée aux dessins annexés, la chambre annulaire étanche 60 peut également être réalisée dans l'alésage 10 du cône 1, la paroi déformable 59 délimitant cette chambre 60 au niveau du contact avec la queue 9 de la partie avant 3, la mise sous pression du liquide contenu dans la chambre 60 étant effectuée manuellement au moyen d'un piston actionné par vis ou par came ou automatiquement au moyen d'un piston actionné par la tirette 5 ou 5' ou par un autre moyen d'actionnement logé dans le cône 1 ou dans la partie 3.

La mise sous pression de la chambre annulaire étanche 60 a pour effet une dilatation ou déformation de la paroi 59 jusqu'à application à force de cette dernière contre la paroi de l'alésage 10 ou de la queue 9.

Ainsi, il est possible de réaliser un serrage extrêmement efficace de la queue 9 de la partie avant 3 dans l'alésage 10 du cône 1 d'un dispositif de montage à queue conique, par gonflement et dilatation de la matière. En outre, le mode de réalisation conforme à l'invention permet l'obtention d'une précision en tolérances de concentricité d'une très haute qualité.

L'invention permet la réalisation d'un dispositif de montage à queue conique permettant l'obtention d'une rigidité accrue de l'ensemble en position de service et supportant mieux les efforts axiaux et radiaux s'exerçant sur eux.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

**Revendications**

1. Dispositif de montage à queue conique, en particulier au cône 7/24$^e$, à application cône et face pour attachements, porte-outils et outils, essentiellement constitué par un cône (1) d'introduction dans la broche (2), par une partie avant (3) centrée dans le cône (1) et pourvue d'une collerette (4) d'application contre la face de la broche (2), par une tirette (5) d'assemblage du cône (1) et de la partie avant (3) et par un ensemble élastique (6) de pression du cône (1) dans la broche (2) en position de verrouillage, monté en compression entre ledit cône (1) et la partie avant (3), caractérisé en ce qu'il est pourvu d'un moyen (7) élastiquement déformable appliquant la partie avant (3) à force dans le cône (1), en position de verrouillage.

2. Dispositif, suivant la revendication 1, caractérisé en ce que le moyen (7) élastiquement déformable se présente avantageusement sous forme de portions de cône (8) délimitées par des fentes (8') s'étendant longitudinalement et à équidistance sur la circonférence du cône (1).

3. Dispositif, suivant la revendication 2, caractérisé en ce que les fentes (8') sont avantageusement remplies par une matière compressible élastiquement déformable.

4. Dispositif, suivant la revendication 1, caractérisé en ce que l'ensemble élastique (6) de pression du cône (1) dans la broche (2) en position de verrouillage est pourvu d'un dispositif de réglage (14) coopérant avec une tirette courte (5') d'assemblage du cône (1) et de la partie avant (3), ladite tirette (5') étant vissée dans le cône (1) et bloquée contre sa face arrière.

5. Dispositif, suivant la revendication 4, caractérisé en ce que le dispositif de réglage (14) est constitué par un écrou (15) serrant l'ensemble élastique (6), dans un alésage (16) de la queue (9) de la partie avant (3), contre la tête d'une vis (17), pourvue à ses deux extrémités d'un six-pans creux de manoeuvre, qui coopère avec un taraudage de la tirette courte (5'), et par un contre-écrou (18) s'appuyant contre ladite vis (17) et également pourvue d'un six-pans creux de manoeuvre, la vis (17) et le contre-écrou (18) pouvant être munis, en outre, d'un perçage axial de passage de fluide de lubrification.

6. Dispositif, suivant la revendication 5, caractérisé en ce que le contre-écrou (18) peut être remplacé par un dispositif d'anti-desserrage prévu dans les filets du taraudage de la tirette (5').

7. Dispositif, suivant la revendication 1, caractérisé en ce que le moyen (7) élastiquement déformable est constitué sous forme d'une cage à billes (20) monté avec précontrainte dans l'alésage (10) du cône (1) et sur la queue (9) de la partie avant (3).

8. Dispositif, suivant la revendication 7, caractérisé en ce que le cône (1) est avantageusement pourvu, sur la profondeur de l'alésage (10), d'au moins une fente longitudinale, la cage à billes (20) étant disposée ou réalisée, de manière connue, de telle sorte qu'aucune bille n'entre dans la ou les fentes.

9. Dispositif, suivant l'une quelconque des revendications 4, 5 et 7, caractérisé en ce que l'assemblage sans jeu entre la queue (9) de la partie avant (3) et le cône (1) est effectué, d'une part, au moyen d'une cage à billes (20) logée dans le cône (1) avec précontrainte, ledit cône (1) pouvant être muni d'au moins une fente longitudinale au niveau de l'alésage (10) et, d'autre part, au moyen d'un dispositif (14) de réglage de l'ensemble élastique (6).

10. Dispositif, suivant la revendication 1, caractérisé en ce que le moyen (7) élastiquement déformable est constitué par une bague fendue conique (21), intercalée entre une queue conique (9') de la partie avant (3) et l'alésage (10) du cône (1), s'appuyant dans le fond de l'alésage (10) sur 1 ensemble élastique de pression (6) et retenue dans ledit alésage (10), contre l'action de l'ensemble (6), par une bague élastique (22), l'assemblage entre la partie avant (3) et le cône (1) étant réalisé par un tirette (5).

11. Dispositif, suivant la revendication 10, caractérisé en ce que la bague fendue conique (21) est munie sur son pourtour, à intervalles réguliers, de fentes (23, 24) ouvertes alternativement sur les faces supérieure et inférieure et d'une fente traversante (25).

12. Dispositif, suivant la revendication 1, caractérisé en ce que le moyen (7) élastiquement déformable est constitué par deux pièces (26) en forme de pointes, de billes, ou autres, disposées dans un logement s'étendant diamétralement dans la queue (9) de la partie avant (3) et chargées par l'ensemble élastique (6), ces pièces (26) coopérant, en position d'assemblage de la partie avant (3) et du cône (1), avec un logement (27) de section correspondante ou sensiblement correspondante, s'étendant sur tout ou partie de la paroi de l'alésage (10) du cône (1) suivant une génératrice circulaire, ce logement (27) étant relié à la face supérieure du cône (1) par l'intermédiaire de deux ouvertures longitudinales diamétralement opposées de passage des pièces (26), décalées par rapport à la position de service desdites pièces (26), la tirette (5) étant simplement vissée dans le cône (1) et s'appuyant sur sa face arrière.

13. Dispositif, suivant la revendication 12, caractérisé en ce que les pièces (26) sont pourvues chacune d'un arrêt (28) guidé dans une rainure (29) de la queue (9).

14. Dispositif, suivant la revendication 12, caractérisé en ce que l'ensemble élastique (6), sur lequel s'appuient les pièces (26) formant le moyen (7), est constitué par une matière compressible telle que du caoutchouc, ou analogue, disposée dans un logement axial de la queue (9) de la partie avant (3) et dont la compression est réglable au moyen d'un bouchon (30).

15. Dispositif, suivant la revendication 1, caractérisé en ce que le moyen (7) élastiquement déformable est constitué par plusieurs pièces (31) mobiles radialement, uniformément réparties sur la circonférence de la queue (9), coopérant avec une gorge périphérique (34) et actionnées par un poussoir tronconique central (32) chargé par l'ensemble élastique de pression (6), dont la pression de serrage est réglée au moyen d'un écrou (33), ledit poussoir (32) étant muni d'un axe creux (35) de guidage à ses extrémités dans la partie avant (3) et dans la tirette (5) vissée dans l'extrémité arrière du cône (1), avec interposition de joints toriques d'étanchéité (36).

16. Dispositif, suivant la revendication 15, caractérisé en ce que l'axe creux (35) du poussoir (32) est pourvu, à son extrémité guidée dans la tirette (5), d'un taraudage (37), et la partie avant (3) est munie d'un taraudage axial (38), dans lequel est monté un écrou (39) à six-pans de manoeuvre.

17. Dispositif, suivant l'une quelconque des revendications 15 et 16, caractérisé en ce que les pièces mobiles (31) sont avantageusement chargées par des ressorts de rappel les appliquant contre le poussoir (32).

18. Dispositif, suivant l'une quelconque des revendications 15 à 17, caractérisé en ce que des pièces mobiles (31), chargées par des ressorts de rappel, sont logées avec possibilité de déplacement radial dans la queue (9) de la partie avant (3) contre l'action d'un poussoir conique (32'), vissé à son extrémité dans la tirette (5) et pouvant être bloquée dans cette dernière au moyen d'un écrou (40), ladite tirette (5) étant montée à coulissement dans la partie arrière du cône (1), la queue (9) de la partie avant (3) s'appuyant au fond de l'alésage (10) du cône (1) sur l'ensemble élastique (6) et lesdites pièces mobiles (31) traversant des dégagements correspondants du cône (1) et coopérant avec une gorge circulaire (34') ou des logements circulaires prévus dans la broche (2).

19. Dispositif, suivant la revendication 18, caractérisé en ce que la queue (9) de la partie avant (3) est avantageusement étagée et présente, au niveau du guidage des pièces mobiles (31), une partie de plus grand diamètre (9').

20. Dispositif, suivant la revendication 18, caractérisé en ce que l'extrémité du poussoir conique (32'), vissé dans la tirette (5), ainsi que l'écrou (40) sont munis d'un six-pans creux de manoeuvre destiné à permettre le réglage de la position du poussoir (32') par rapport à la tirette (5) et le blocage en position au moyen d'un outil introduit à travers le perçage central de ladite tirette (5).

21. Dispositif, suivant la revendication 18, caractérisé en ce que les pièces mobiles (31), chargées par des ressorts de rappel, sont logées de manière déplaçables radialement dans la queues (9) de la partie avant (3) contre l'action d'un poussoir tronconique (32") s'appuyant sur l'ensemble élastique (6), dont la pression est réglable au moyen d'un écrou (51) à six-pans creux traversant, le poussoir tronconique (32") pouvant être manoeuvré contre l'action de l'ensemble (6), dans le sens d'une rétraction des pièces (31), au moyen d'une vis-écrou (52) logée dans la partie avant (3) et la face arrière (12) de la partie avant (3) est pourvue d'un dispositif (53) de verrouillage de positionnement de ladite partie avant (3) par rapport au cône (1).

22. Dispositif, suivant la revendication 21, caractérisé en ce que le dispositif de verrouillage (53) est constitué par un axe ou pige (54), qui est monté contre l'action d'un ressort de rappel (55) dans un logement correspondant de la partie avant (3) et maintenu dans ce logement au moyen d'une bague élastique, et qui coopère avec un logement (56), ménagé dans la face avant du cône (1) et présentant une pente inclinée (57) de dégagement de la pige (54) lors du démontage, un trou (58) étant prévu, en outre, radialement sous le logement (56).

23. Dispositif, suivant la revendication 21, caractérisé en ce que la partie avant (3), la tirette (5), le poussoir tronconique (32"), l'ensemble élastique

(6) et la vis-écrou (52) sont avantageusement munis d'un perçage axial permettant l'accès au six-pans creux de manoeuvre de l'écrou (51).

24. Dispositif, suivant la revendication 1, caractérisé en ce que le moyen (7) élastiquement déformable appliquant la partie avant (3) à force dans le cône (1), en position de verrouillage est avantageusement réalisé sous forme d'un dispositif de transmission d'effort à renvoi d'angle constitué par des verrous en coin (42) logés dans des dégagements de la collerette (4) et coopérant en position de service avec des faces inclinées de manière correspondante des tenons d'entraînement (43) de la broche (2) de la machine, lesdits verrous (42) étant rappelés en position de repos par des ressorts (44), par des billes de transmission d'effort (45) s'appuyant sur la face arrière des verrous (42) et par des poussoirs (46), présentant une extrémité inclinée d'appui de la bille (45) correspondante, guidés dans la queue (9) de la partie avant (3) au moyen d'un ergot (47) coulissant dans une rainure 48 correspondante et s'appuyant par l'intermédiaire d'une rondelle (49) sur l'ensemble élastique de pression (6), l'assemblage entre la partie avant (3) et le cône (1) étant réalisé au moyen d'une tirette (5) dont la position est réglable et peut être bloqué par un écrou (50).

25. Dispositif, suivant l'une quelconque des revendications 1, 4, 5, 9, 10, 12, 14, 15, 18, 21, 23 et 24, caractérisé en ce que l'ensemble élastique (6) peut avantageusement être constitué sous forme d'un bloc compressible en caoutchouc, ou autre matière synthétique, sous forme d'un ou de plusieurs ressorts, sous forme d'un dispositif de compression hydraulique ou pneumatique ou encore sous forme d'une poudre compressible.

26. Dispositif, suivant la revendication 1, caractérisé en ce que le moyen élastiquement déformable (7) appliquant la partie avant (3) à force dans le cône (1), en position de verrouillage, est avantageusement constitué sous forme d'un dispositif hydraulique à pression réglable comportant une paroi déformable (59) au niveau de la liaison entre la queue (9) de la partie avant (3) et l'alésage (10) du cône (1).

27. Dispositif, suivant la revendication 26, caractérisé en ce que le dispositif hydraulique à pression réglable formant le moyen (7) élastiquement déformable est avantageusement constitué par une chambre annulaire étanche (60) délimitée, sur le pourtour de la queue (9), par la paroi déformable (59) et reliée par un canal (61) à une chambre étanche (62), dans laquelle est monté, de manière déplaçable, contre l'action d'une vis de réglage (63), un piston (64) pourvu d'une garniture d'étanchéité (65).

28. Dispositif, suivant la revendication 27, caractérisé en ce que la paroi déformable (59) est, de préférence, sous forme d'une bague mince sertie à ses extrémités aux extrémités de la chambre annulaire (60) ou délimitant cette chambre par interposition de joints d'étanchéité.

29. Dispositif, suivant l'une quelconque des revendications 4, 5 et 27, caractérisé en ce que l'actionnement du dispositif hydraulique est réalisé au moyen d'un piston relié à la vis (17) et comprimant le liquide hydraulique dans la chambre (62) en fin de course de serrage du cône (1) de la partie avant (3) dans le cône (11) de la broche (2), le piston (64) et la chambre (62) étant avantageusement logés dans l'ensemble (6).

30. Dispositif, suivant l'une quelconque des revendications 26 à 29, caractérisé en ce que la chambre annulaire étanche (60) est réalisée dans l'alésage (10) du cône (1), la paroi déformable (59) délimitant cette chambre (60) au niveau du contact avec la queue (9) de la partie avant (3), la mise sous pression du liquide contenu dans la chambre (60) étant effectuée manuellement au moyen d'un piston actionné par vis ou par came ou automatiquement au moyen d'un piston actionné par la tirette, ou par un autre moyen d'actionnement logé dans le cône (1) ou dans la partie (3).

Fig.1

Fig.2

Fig.3

Fig.4

Fig.5

Fig. 6

Fig. 7

Fig. 8

Fig. 9

Fig.10

Fig.11

Fig.12

Fig.13

# Fig.14

Fig. 15

Fig. 16

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 185 842 (GTE VALERON) * Page 4, lignes 22-35; page 5; figures 1,2 * | 1,18,19 | B 23 B 31/26 B 23 B 31/02 B 23 B 31/30 |
| A | | 15-17, 20-23 | |
| | --- | | |
| X | EP-A-0 164 582 (KÖNIG) * Page 8, lignes 15-19; figure 1 * | 1,26-30 | |
| | --- | | |
| A | DE-C-3 632 045 (ECKLE) * Figure 2 * | 12,13 | |
| | --- | | |
| A | DE-A-2 102 051 (BOHLE) * Figure 1 * | 1,2 | |
| | --- | | |
| A | GB-A- 482 766 (HERBERT) | 3 | |
| | --- | | |
| A | US-A-4 660 840 (MIZOGUCHI) | 7 | |
| | --- | | |
| A | FR-A-2 614 224 (ATELIERS MECANIQUES DE FRAISSES) | 10 | DOMAINES TECHNIQUES RECHERCHES (Int. Cl.5) |
| | --- | | |
| A | NL-C- 73 784 (VERSCHURE) * Fig. Bloc en caoutchouc (3) déformable, par des tiges (6) et (9). Tige (6) commandée par le vis (7) et la tige biseantée (8). Tige (9) commandée par la pointe (11) * | 25 | B 23 B 31/00 |
| | --- | | |
| A | US-A-2 759 733 (SLOAN) * Figure 2; ref. 46 * | 25 | |
| | --- | | |
| A | DE-A-3 521 799 (KOMET) | | |
| | --- | | |
| A | DE-U-8 701 499 (ILG) | | |
| | --- -/- | | |

Le présent rapport a été établi pour toutes les revendications

| Lieu de la recherche | Date d'achèvement de la recherche | Examinateur |
|---|---|---|
| LA HAYE | 09-02-1990 | BOGAERT F.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

Office européen
des brevets

**RAPPORT DE RECHERCHE EUROPEENNE**

Numero de la demande

EP 89 44 0121

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 541 236 (OTT) | | |
| A | DE-A-3 436 733 (WOZAR) | | |
| A | US-A-4 122 755 (JOHNSON) | | |

DOMAINES TECHNIQUES
RECHERCHES (Int. Cl.5)

Le présent rapport a été établi pour toutes les revendications

| Lieu de la recherche | Date d'achèvement de la recherche | Examinateur |
|---|---|---|
| LA HAYE | 09-02-1990 | BOGAERT F.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)